(19) Europäisches Patentamt
European Patent Office
Office européen des brevets

(11) Publication number: **0 099 420 A1**

# (12) EUROPEAN PATENT APPLICATION

(21) Application number: 82106600.8

(22) Date of filing: 21.07.82

(51) Int. Cl.$^3$: A 23 K 1/17

(43) Date of publication of application: 01.02.84 Bulletin 84/5

(84) Designated Contracting States: AT BE CH DE FR GB IT LI LU NL SE

(71) Applicant: KAKEN CHEMICAL COMPANY, LTD.
No. 28-8, 2-chome, Honkomagome Bunkyo-Ku
Tokyo 113(JP)

(72) Inventor: Ebata, Eiichi c/o Kaken Chemical Co., Ltd.
28-8, Honkomagome 2-chome
Bunkyo-ku Tokyo(JP)

(72) Inventor: Inoue, Yukio c/o Kaken Chemical Co., Ltd.
28-8, Honkomagome 2-chome
Bunkyo-ku Tokyo(JP)

(72) Inventor: Mizukoshi, Koji c/o Kaken Chemical Co., Ltd.
28-8, Honkomagome 2-chome
Bunkyo-ku Tokyo(JP)

(74) Representative: Vossius Vossius Tauchner Heunemann Rauh
Siebertstrasse 4 P.O. Box 86 07 67
D-8000 München 86(DE)

## (54) Feed utilisation efficiency improver.

(57) A livestock feed utilization efficiency improver comprises lysocellin or a salt or ester thereof as an active ingredient.

EP 0 099 420 A1

Croydon Printing Company Ltd

VOSSIUS · VOSSIUS · TAUCHNER · HEUNEMANN · RAUH
PATENTANWÄLTE 0099420

SIEBERTSTRASSE 4 · 8000 MÜNCHEN 86 · PHONE: (089) 47 40 75
CABLE: BENZOLPATENT MÜNCHEN · TELEX 5-29 453 VOPAT D

Our Ref.: R 983 EP July 21 , 1982
Case: Lysocellin
KAKEN CHEMICAL COMPANY, LIMITED
Tokyo, Japan

" Feed Utilization Efficiency Improver "

The present invention relates to a feed utilization efficiency improver which comprises lysocellin or a salt or ester thereof as an active ingredient.

It has been proposed to improve the growth rate and egg production efficiency of livestock and poultry by adding antibiotic to feeds. However, antibiotics have a common action on humans and animals. The antibiotics remaining and accumulated in the animals are incorporated into the human body together with the meat of the animals whereby resistant bacteria may be formed or other adverse effects may be caused.

It is an object of the present invention to provide a feed utilization efficiency improver which does not cause the formation of resistant bacteria or other adverse effects.

The foregoing and other objects of the present invention have been attained by providing a feed utilization efficiency improver for livestock and poultry for food which comprises lysocellin or a salt or ester thereof.

In the course of various studies of feed utilization efficiency improvers which do not have adverse effects

and produce the formation of resistant bacteria it has been found that lysocellin imparts a remarkable improvement in the feed utilization efficiency for livestock, especially ruminants and pigs.

Lysocellin is an antibiotic obtained from culture media produced by fermentation of the species Streptomyces cacaoi (Waksman) Waksman & Henrici var. asoensis Isono, Nagatsu and Suzuki K-9 Met strain (FERM-P 1148) or its mutants, and has the formula

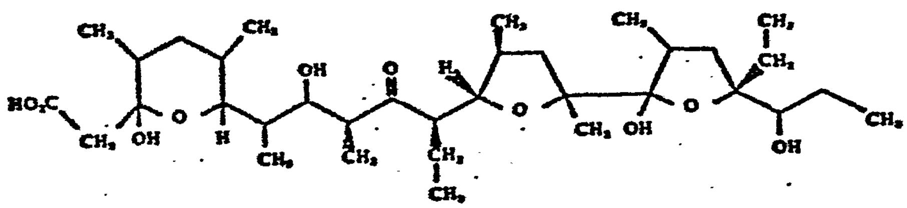

Lysocellin is a polyether type antibiotic and has excellent antibiotic characteristics. It has been found that lysocellin does not have the above-mentioned disadvantageous effects. Lysocellin is a commercially available product.

Lysocellin was reported in J. Antibiotics No. 2 Vol. 28 pp 118-121 (1975). The sodium salt of lysocellin forms colorless needle-like crystals having the following properties:

Melting point of 158 - 160° C

Optical rotation $[\alpha]_D^{25}$ + 11.5° (c 1, methanol)

IR Spectrum (KBr): 3450 - 3300 $cm^{-1}$, 2960, 2930, 1710, 1590 $cm^{-1}$

MW: 659 $[C_{34}H_{59}O_{10}Na \cdot 1/2H_2]$

Lysocellin is a monocarboxylic acid having a pKa of 6.6 (titrated in 66 % dimethylformamide).

The biological properties of lysocellin are as follows: The antimicrobial activities of lysocellin are listed in Table 1. Lysocellin is active against gram-positive

bacteria, antibiotic resistant Staphylococcus aureus, and also against some fungi, but it is not active against gram-negative bacteria. When Bacillus subtilis was grown on a liquid medium, lysocellin caused bacterial lysis.

Lysocellin was inactive against Staphylococcus aureus infection in mice when given by intraperitoneal administration. The $LD_{50}$ of this antibiotic is about 70 mg/kg., given intraperitoneally in mice.

Table 1

Antimicrobial spectra of lysocellin

| Microorganism | Minimum inhibitory concentration (μg/mℓ) |
|---|---|
| Staphylococcus aureus FDA 209P | 10 |
| Antibiotic resistant S. aureus | 4 |
| Sarcina lutea | 10 |
| Bacillus subtilis | 10 |
| Mycobacterium smegmatis | 20 |
| Escherichia coli | >100 |
| Antibiotic resistant E. coli | >100 |
| Shigella dysenteriae | >100 |
| Salmonella typhimurium | >100 |
| Pseudomonas aeruginosa | >100 |
| Botrytis cinerea | 50 |
| Helminthosporium oryzae | 50 |
| Fusarium oxysporum | 100 |
| Alternaria kikuchiana | 100 |

The feed utilization efficiency improver of the present invention can be in the form of a powder, tablet or a capsule or any other desired form suitable for feeding to animals. It is possible to add the active ingredient

to drinking water or feed. The active ingredient can be also combined with another growth promoter or other antibiotic.

The salt of lysocellin used is preferably the sodium or potassium salt. The ester of lysocellin used is preferably a $C_1$ - $C_8$ alkyl ester or benzyl ester of lysocellin.

The concentration of the active ingredient employed depends upon the kinds and ages of the animals concerned. In the case of cattle, a feed comprising 0.5 to 200 ppm, preferably 1 to 100 ppm, of the active ingredient is administered. In the case of pigs, a feed comprising 0.5 to 300 ppm, preferably 1 to 200 ppm, of the active ingredient is administered.

Lysocellin as the active ingredient has not only a growth promoting effect but also a feed utilization efficiency improving effect, and it also causes fewer accumulation and residual problems in the animal body because of lower intestinal absorption.

When the feed utilization efficiency improver of the present invention is fed to ruminants and pigs, the effect is especially remarkable. In general, the mechanism of utilization of a feed by ruminants is to decompose carbohydrates into monosaccharides by microorganisms in the gastric tract and to convert the monosaccharides into pyruvic acid derivatives. The pyruvic acid derivatives are converted into volatile fatty acids such as acetic acid, butyric acid and propionic acid in the fermentation by microorganism. In the rumen of ruminants, the utilization of propionic acid is especially high though acetic acid and butyric acid are also utilized. When lysocellin is administered to ruminants, it is considered that lysocellin accelerates the production of propionic acid in the rumen of ruminants as shown in the following

tests, whereby the feed utilization efficiency is remarkably increased.

When lysocellin is administered to pigs, especially young pigs, the feed utilization efficiency is remarkably increased. In general, pigs and especially young pigs, suffer from diarrhea. It is estimated that 60 to 70 % of young pigs suffer from diarrhea during the lactation stage to the ablactation stage. When lysocellin is administered to pigs, the diarrhea can be prevented and so the feed utilization efficiency improved as shown in the following test results.

The present invention will be further illustrated by examples and tests.

**EXAMPLE 1:**

| | |
|---|---|
| Lysocellin | 1% |
| Cornstarch | 99% |

The components were ground and uniformly mixed to prepare a premix containing 1% of lysocellin. The premix is used in Example 2.

**EXAMPLE 2:**

| | |
|---|---|
| Beer lees | 14 kg. |
| Rice straw | 42 kg. |
| Pasture (grass) | 44 kg. |
| Premix of Example 1 | 200 g. |

The components were mixed to prepare feed for cattle.

EXAMPLE 3:

| | |
|---|---|
| Lysocellin | 0.1% |
| Wheat bran | 99.9% |

The components were uniformly mixed to prepare a premix containing 0.1% of lysocellin.

Test 1:

Growth promotion effect and feed utilization efficiency improvement effect of lysocellin were tested using nine Holstein bullocks (three in each group).

Lysocellin was mixed with the standard feed shown in Table 2 and the feed was fed for 24 weeks. The results are shown in Table 3.

Table 2 Standard feed:

| | |
|---|---|
| Beer wheat straw: | 10% |
| Feed composition: | 90% |

("Newking" for cattle growth manufactured by Kumiai Kagaku)

| | Beer wheat straw | Feed composition |
|---|---|---|
| Water | 14.83% | - |
| Crude protein | 2.05% | 13.0% |
| Crude fat | 0.83% | 2.0% |
| Crude fiber | 37.16% | 9.0% |
| Crude ash | 6.26% | 9.0% |

Table 3

| Content of lysocellin in feed (ppm) | 0 | 15 | 30 |
|---|---|---|---|
| Average weight at initiation (kg) | 340 | 334 | 343 |
| Average weight gain during administration (kg) | 184 | 191 | 190 |
| Average of feed fed during administration (kg) | 1426 | 1322 | 1295 |
| Feed requirement rate | 7.75 | 6.92 | 6.82 |
| Improvement of feed requirement rate (%) | – | 10.7 | 12.0 |

The weight gain is improved by 4% by the administration of the feed containing lysocellin. The amount of feed is reduced by 7 to 9%. The feed requirement rate is remarkably improved.

Test 2:

The gastric juice of the rumen of each bullock of Test 1 was sampled with a catheter through the nose to measure the contents of acetic acid and propionic acid in the first gastric juice. The ratio of propionic acid to acetic acid was calculated. The results are shown in Table 4.

Table 4

| Content of lysocellin in feed (ppm) | 0 | 15 | 30 |
|---|---|---|---|
| Ratio of propionic acid to acetic acid (average)<br>Before administration | 0.56 | 0.58 | 0.55 |
| Administration for one day | 0.54 | 0.72 | 0.77 |
| Administration for 12 weeks | 0.41 | 0.53 | 0.59 |
| Administration for 24 weeks | 0.30 | 0.48 | 0.56 |

It was found that the ratio of propionic acid to acetic acid in the gastric juice of the rumen after the administration of lysocellin is higher than that without administration. This results in the improvement of the feed utilization efficiency.

Test 3:

The growth promotion effect and feed utilization efficiency improvement effect of lysocellin and condition of feces were tested using fifteen Landrace Hampshire piglets (five in each group).

Lysocellin was mixed with the standard feed shown in Table 5 and the feed was fed for 28 days. The results are shown in Table 6.

Table 5 Formulation of Standard Feed

| Component | Content (%) |
|---|---|
| Corns: corn, maize, wheat | 74.0% |
| Brans: defatted rice bran, wheat bran | 4.0% |
| Meals: fish meal, defatted milk | 16.5% |
| Vegetable oil cakes: soybean oil cake | 2.5% |
| Vitamins - minerals | 3.0% |

Table 6

| Content of lysocellin in feed (ppm) | 0 | 25 | 50 |
|---|---|---|---|
| Average weight at initiation (kg) | 7.13 | 7.08 | 7.09 |
| Average weight gain during administration (kg) | 9.55 | 10.41 | 10.61 |
| Average amount of dose of feed during administration (kg) | 18.11 | 18.10 | 18.15 |
| Feed requirement | 1.90 | 1.74 | 1.71 |
| Improvement of feed requirement rate % | - | 8.4 | 10.0 |
| Total days for diarrhea in each group | 58.8 | 40.6 | 24.7 |
| Total days for test in each group | 140 | 140 | 140 |

The weight gain increased by 9 - 11% by the administration of lysocellin and the feed requirement rate was improved by 8 to 10%. A decrease in the incidence of diarrhea of the piglets was also found.

CLAIMS:

1) A livestock feed utilization efficiency improving agent which comprises lysocellin or a salt or ester thereof as an active ingredient.

2) The efficiency improving agent according to Claim 1 wherein said salt or ester of lysocellin is sodium or potassium salt or a $C_1$ - $C_8$ alkyl ester or benzyl ester of lysocellin.

3) The efficiency improving agent according to Claim 1 and 2 wherein said active ingredient is incorporated into a feed at a concentration of 0.5 to 300 ppm.

4) Use of lysocellin or a salt or ester thereof for preparing the livestock feed utilization efficiency improving agent according to Claims 1 to 3.

0099420

European Patent Office

# EUROPEAN SEARCH REPORT

Application number

EP 82 10 6600

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| E | CHEMICAL ABSTRACTS, vol. 97, no. 19, 8th November 1982, page 595, col. 2, no. 161564e, Columbus Ohio (USA); & JP - A - 82 125 660 (KAKEN CHEMICAL CO.) (05-08-1982) *Abstract* --- | 1-4 | A 23 K 1/17 |
| X | EP-A-0 025 697 (ELI LILLY AND COMPANY) *Claims 1-2,5,12-13; page 8, lines 27-30; page 9, lines 1-12* --- | 1-4 | |
| X | GB-A-2 055 094 (INTERNATIONAL MINERALS & CHEMICAL CORPORATION) *Claims 1,3,26,30,33,39,43* --- | 1,3-4 | |
| | | | TECHNICAL FIELDS SEARCHED (Int. Cl. 3) |
| A | US-A-4 218 443 (K.COMAI et al.) *Abstract; column 10, lines 25-68; column 16, lines 20-65; claims 1,8* --- | 1,3-4 | A 23 K |
| A | US-A-4 161 520 (M.W.OSBORNE AND M.R.COHEN) *Claims 1-3,12* ----- | 1,3-4 | |

The present search report has been drawn up for all claims

| Place of search | Date of completion of the search | Examiner |
|---|---|---|
| THE HAGUE | 16-03-1983 | GALLIGANI L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document